# EUROPEAN PATENT APPLICATION

(11) **EP 1 516 895 A1**
(43) Date of publication of application: **23.03.2005**
(21) Application number: 03021278.1
(22) Date of filing: 19.09.2003
(51) Int. Cl.: C09B 23/16, G11B 7/24, C09B 57/02

(54) **New coumarin type dyes for optical data recording**

(71) Applicant: CLARIANT INTERNATIONAL LTD., 4132 Muttenz (CH)
(72) Inventor: Graciet, Jean-Christophe, 68128 Village-Neuf (FR)

(57) **Abstract**

The present invention relates to new coumarin compounds and to their use as dyes in optical layers for optical data recording, preferably for optical data recording using a laser with a wavelength up to 450 nm.

The invention further relates to an optical layer comprising said dyes and to a write only read many (WORM) type optical recording medium capable of recording and reproducing information with radiation of blue laser, which employs a coumarin type dye in the optical layer.

## Description

The present invention relates to new coumarin compounds and to their use as dyes in optical layers for optical data recording, preferably for optical data recording using a laser with a wavelength up to 450 nm.
The invention further relates to an optical layer comprising said dyes and to a write only read many (WORM) type optical recording medium capable of recording and reproducing information with radiation of blue laser, which employs a coumarin type dye in the optical layer.

Recently, organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

For industrial application, these dyes have to be suitable for the spin coating process to prepare thin films, i.e. they have to be sufficiently soluble in the organic solvents generally applied in the spin coating process.

WORM (write once read many) type and erasable type optical recording media reproduce information by detecting variations in the reflectivity caused by physical deformation, by alterations of optical characteristics as well as by phase and magnetic properties of a recording layer before and after the recording.
Recordable compact discs (CD-R) are widely known as a WORM type optical recording medium. Recently, digital versatile discs (DVD) with increased information storage capabilities up to 4.7 GBytes have been commercialized.

The DVD-R technology adopts as a light source a red diode laser with a wavelength of 630-670 nm. Thereby the pit size and track interval can be reduced, increasing the information storage capacity by up to 6-8 times compared to CD-R's.

Blu-ray discs (Blu-ray disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating or soaking. The preferred process in industry is spin coating to form an optical layer of about 70 nm to 250 nm thickness. For the application in the spin coating process, the material of the optical layer has to be highly soluble in organic solvents.

The present invention relates to new coumarin compounds as described below. Surprisingly it has been found, that coumarin compounds as described below are useful as dye compounds in optical layers for optical recording media.

The present invention therefore further relates to optical layers comprising coumarin compounds as described below as dyes and to the use of said optical layers for optical data recording media.

More particularly, the invention relates to coumarin type dyes, to an optical layer comprising said dyes and to a write only read many (WORM) type optical data recording medium capable of recording and reproducing information with radiation of blue laser of preferably 405 nm, which employ a coumarin type dye in the optical layer.

New coumarin type dyes according to the invention are compounds of the formula (I): 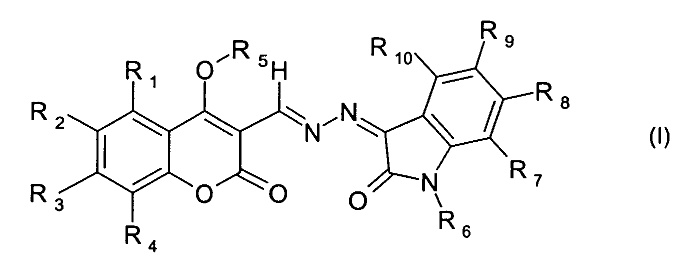 wherein
- R₁ to R₄: independently of one another, represent hydrogen, hydroxy (-OH), halogen, CX₃ with X being chlorine or fluorine; nitro (-NO₂), cyano (CN), C₆₋₁₂ aryl or -NR₁₁R₁₂, in which R₁₁ and R₁₂ are independently
hydrogen, C₁₋₈ alkyl or C₆₋₁₂ aryl;
- R₅: represents hydrogen or C₁₋₈ alkyl;
- R₆: represents hydrogen or C₁₋₈ alkyl;
- R₇ to R₁₀: independently of one another, represent hydrogen, hydroxy (-OH), halogen, CX₃ with X being chlorine or fluorine, nitro (-NO₂), cyano (CN), C₆₋₁₂ aryl or -NR₁₁R₁₂, in which R₁₁ and R₁₂ are independently hydrogen, C₁₋₈ alkyl or C₆₋₁₂ aryl;

In a preferred aspect, the present invention relates to a dye compound of the formula (I) wherein
- R₁ to R₄: independently of one another, represent hydrogen, halogen, CX₃ with X being chlorine or fluorine; nitro (-NO₂), cyano (CN) or -NR₁₁R₁₂, in which R₁₁ and R₁₂ are independently hydrogen or C₁₋₈ alkyl;
- R₅: represents hydrogen or C₁₋₄ alkyl;
- R₆: represents hydrogen or C₁₋₄ alkyl;
- R₇ to R₁₀: independently of one another, represent hydrogen, halogen, CX₃ with X being chlorine or fluorine; nitro (-NO₂), cyano (CN), -NR₁₁R₁₂, in which R₁₁ and R₁₂ are independently hydrogen or C₁₋₈ alkyl.

In one more preferred aspect, the present invention relates to a dye compound of the formula (I) wherein

R₁, R₂, R₅, R₆ and R₇ to R₁₀ represent hydrogen.

In another more preferred aspect, the present invention relates to a dye compound of the formula (I) wherein
- R₁ to R₂: independently of one another, represent chlorine;
- R₅: represents hydrogen;
- R₆: represents C₁ alkyl;
- R₈: represents nitro;
- R₇, R₉ and R₁₀: represent hydrogen.

The present invention further relates to an optical layer comprising at least one dye compound of formula (I).

An optical layer according to the invention may also comprise a mixture of two or more, preferably of two dye compounds of formula (I) as defined above.

Further, the invention relates to a method for producing optical layers comprising the following steps
(a) providing a substrate
(b) dissolving a dye compound or a mixture of dye compounds of formula (I) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol , halogen substituted C₁₋₈ alcohols, C₁₋₈ ketone, C₁₋₈ ether, halogen substituted C₁₋₄ alkane, or amides.

Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.

Preferred amides are for example dimethylformamide or dimethylacetamide.

The optical layer (dye layer) obtained preferably has a thickness from 70 to 250 nm.

In a preferred aspect, the present invention provides for an optical layer suitable for high-density recording material, e.g. of the WORM disc format, in a laser wavelength range of from 350-450nm, preferably around 405 nm.

The dye compounds of formula (I) possess the required optical characteristics (such as high absortivity, high recording sensitivity as example), an excellent solubility in organic solvents, an excellent light stability and a decomposition temperature of 250-300°C.

### Preparation of coumarin type dyes according to the invention

The coumarin type dye compounds of formula (I) are obtained by condensing compound (C) with compound (D) in a ratio of 1:1 in polar solvent in the presence of an organic acid as a catalyst.
Compound (C) is obtained by a Vilsmeier-type reaction (carbonylation of compound (A)), while compound (D) is synthesized by reaction of hydrazine and an isatin derivative (B) also in a polar solvent in presence of an organic acid as a catalyst. 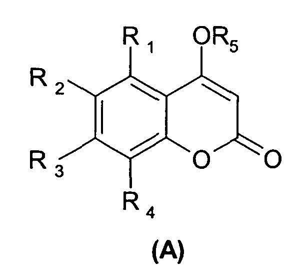 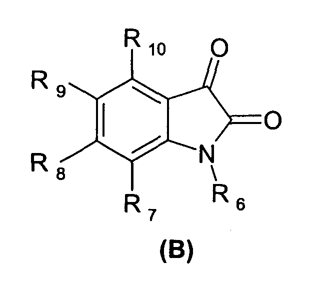 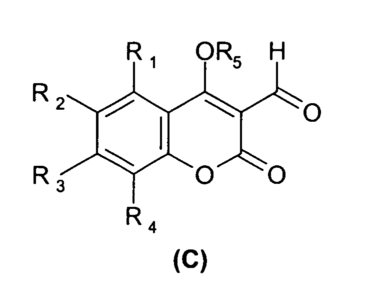 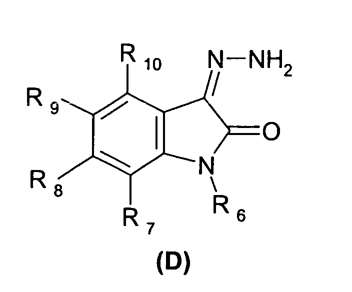 wherein R₁ to R₁₀ are defined as above.

The process for preparation can be described by the following steps:
(a) a Vilsmeier-type reaction on compound (A) providing compound (C);
(b) a condensation reaction with hydrazine on compound (B) providing compound (D);
(c) a condensation reaction between compounds (C) and (D) leading to the compound of formula (I);

The Vilsmeier reaction to obtain compound (C) (setp (a)) is known in the art.
The condensation reaction between hydrazine and compound (B) (step (b)) is performed in a polar solvent selected from the group consisting of C₁₋₈ alcohols, dimethylformamide (DMF), N-methylpyrolidone (NMP) or a mixture of one of these solvents with water or water itself, in the presence of an organic acid as a catalyst, which is preferably selected from the group consisting of formic acid, acetic acid or para-toluenesulfonic acid.
The final condensation reaction between (C) and (D) (step (c)) is performed in a polar solvent selected from the group consisting of C₁₋₈ alcohols, dimethylformamide (DMF), N-methylpyrolidone (NMP) or a mixture of one of these solvents with water or water itself, in the presence of an organic aid as catalyst, which is preferably selected from the group consisting of formic acid, acetic acid or para-toluenesulfonic acid.

Preferred solvents used in the process are ethanol or dimethylformamide (DMF). The most preferred organic acid used in the process is acetic acid.

### Preparation of high density optical data recording medium

The preparation of a high density optical data recording medium / a high density optical disc conventionally comprises the following steps:
(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

### EXAMPLES

All coumarin dye compounds were prepared using standard procedures known in the art, involving reaction of the appropriate coumarin derivative with phosphorus oxychloride in dimethylformamide (DMF), which is then precipitated into a salt (preferably NaCl) saturated water solution. The hydrazone of the isatin derivative is obtained by reaction of the isatin derivative with 80% hydrazine in aqueous solution as reaction media at reflux temperature. The two compounds are then reacted in a 1:1 molar ratio in a polar solvent in the presence of an organic acid as catalyst for several hours at reflux. Finally, the coumarin dye can be purified by recrystallization e.g. from an alcohol.

### Example 1

a) 13.0 parts of 4-hydroxycoumarin are stirred into 100 parts of dimethylformamide at 25°C. 15 parts of phosphorus oxychloride are then added over 15 minutes period time while keeping reaction temperature below 50°C. Then the reaction mixture is stirred for 12 hours at reflux, cooled to 25°C and precipitated into a saturated salt water solution. The precipitate is filtered, washed with water and dried. Then the product (12 parts) is purified by refluxing in 100 parts of ethanol, filtered hot and washed with 50 parts of ethanol and then dried. A dark beige compound is obtained with 80% yield.
b) 10 parts of isatin are added to 40 parts of 80% hydrazin solution and stirred at 70°C for 6 hours. The mixture is then filtered and washed with water to neutral pH. The yellowish product is dried and the hydrazon derivative is obtained with 98% yield.
c) 10 parts of previously obtained compound are mixed with 1 part of 3-hydrazon-isatin in 100 parts of ethanol and 1 part of acetic acid. The whole mixture is heated to 78°C and stirred for 6 hours. Reaction mixture is then cooled to 25°C, filtered and washed with 50 parts of ethanol. The yellow presscake is then dried and the following coumarin dye is obtained: 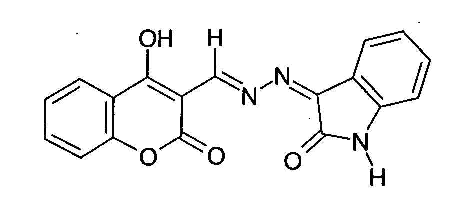
Yield: 95%; Decomp. point (DSC; sharp): 300°C; UV-Vis (EtOH) λₘₐₓ: 406 nm; s (λₘₐₓ): 27000 1.mol⁻¹.cm⁻¹
NMR ¹H (DMSO d⁶): 15.8 - 15.0 (dd, 1H, NH), 13.2 (bs, 1H, OH), 8.8 (dd, 1H, CH=), 8.0 - 7.0 (m, 8H, H arom.).

### Application Example

The optical and thermal properties of the new coumarin dye compounds were studied. The new dyes show high absorption at the desired wavelengths. In addition, the shape of the absorption spectra, that still remains critical to the disc reflectivity and formation of clean mark edges, are composed of one major band, comprised in a range of from 350 to 500 nm, preferably of from 350 to 400 nm.
More precisely, n values of the refractive index were evaluated between 2.3 and 2.7. Light stabilities were found comparable to commercial dyes which usually are stabilised with quenchers for the use in optical data recording.
Sharp threshold of thermal decomposition in the required temperature range characterizes the new coumarin dyes which is assumed to be desirable for the application in optical layers for optical data recording.
As a conclusion, the new coumarin dye compounds are within the specifications which are primarily required by the industry for the use of dyes in optical data recording, in particular in the next-generation optical data recording media in the blue laser range (Blu-ray disc).

## Claims

1. A compound of formula (I) 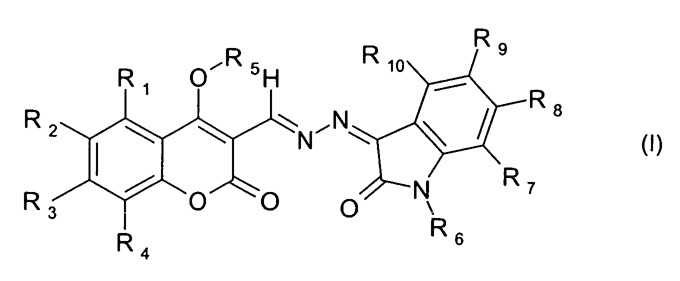 wherein
R₁ to R₄ independently of one another, represent hydrogen, hydroxy (-OH), halogen, CX₃ with X being chlorine or fluorine; nitro (-NO₂), cyano (CN), C₆₋₁₂ aryl or -NR₁₁R₁₂, in which R₁₁ and R₁₂ are independently hydrogen, C₁₋₈ alkyl or C₆₋₁₂ aryl;
R₅ represents hydrogen or C₁₋₈ alkyl;
R₆ represents hydrogen or C₁₋₈ alkyl;
R₇ to R₁₀ independently of one another, represent hydrogen, hydroxy (-OH), halogen, CX₃ with X being chlorine or fluorine; nitro (-NO₂), cyano (CN), C₆₋₁₂ aryl or -NR₁₁R₁₂, in which R₁₁ and R₁₂ are independently hydrogen, C₁₋₈ alkyl or C₆₋₁₂ aryl;

2. A compound according to claim 1, wherein
R₁ to R₄ independently of one another, represent hydrogen, halogen, CX₃ with X being chlorine or fluorine; nitro (-NO₂), cyano (CN) or -NR₁₁R₁₂, in which R₁₁ and R₁₂ are independently hydrogen or C₁₋₈ alkyl;
R₅ represents hydrogen or C₁₋₄ alkyl;
R₆ represents hydrogen or C₁₋₄ alkyl;
R₇ to R₁₀ independently of one another, represent hydrogen, halogen, CX₃ with X being chlorine or fluorine; nitro (-NO₂), cyano (CN), -NR₁₁R₁₂, in which R₁₁ and R₁₂ are independently hydrogen or C₁₋₈ alkyl.

3. A compound according to claim 1, wherein
R₁, R₂, R₅, R₆ and R₇ to R₁₀ represent hydrogen.

4. A compound according to claim 1, wherein
R₁ to R₂ independently of one another, represent chlorine;
R₅ represents hydrogen;
R₆ represents C₁ alkyl;
R₈ represents nitro;
R₇, R₉, R₁₀ represent hydrogen.

5. An optical layer comprising a dye compound according to claims 1 to 4.

6. An optical layer according to claim 5 comprising a mixture of at least two dye compounds according to formula (I).

7. A method for producing optical layers according to claims 5 and 6, comprising the following steps
(e) providing a substrate
(f) dissolving a dye compound or a mixture of dye compounds of formula (I) as defined in claims 1 to 4 in an organic solvent to form a solution,
(g) coating the solution (b) on the substrate (a);
(h) evaporating the solvent to form a dye layer.

8. A method according to claim 7, wherein the substrate is polycarbonate (PC) or polymethylmethacrylate (PMMA).

9. A method according to claim 7, wherein the organic solvent is selected from C₁₋₈ alcohol , halogen substituted C₁₋₈ alcohols, C₁₋₈ ketone, C₁₋₈ ether, halogen substituted C₁₋₄ alkane, or amides.

10. A method according to claim 7, wherein the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and
the amides are selected from dimethylformamide or dimethylacetamide.

11. A method according to claim 7, wherein the optical layer (dye layer) has a thickness from 70 to 250 nm.

12. An optical recording medium comprising an optical layer according to claims 5 or 6, wherein at least one dye compound of the formula (I) as defined in claims 1 to 4 is used.
